# FASCICULE DE BREVET EUROPEEN

(11) **EP 2 774 240 B1**
(45) Date de publication et mention de la délivrance du brevet: **23.03.2016**
(21) Numéro de dépôt: 12778110.2
(22) Date de dépôt: 24.10.2012
(51) Int. Cl.: H02J 1/10, H02J 7/00, B60L 11/00, B60L 11/18

(54) **DISPOSITIF D'EQUILIBRAGE DE CHARGE DES ELEMENTS D'UNE BATTERIE DE PUISSANCE**
VORRICHTUNG ZUM AUSGLEICH DER LADUNG VON ELEMENTEN EINER STROMBATTERIE
DEVICE FOR BALANCING THE CHARGE OF THE ELEMENTS OF AN ELECTRICAL POWER BATTERY

(30) Priorité: 31.10.2011 FR 1159866
(43) Date de publication de la demande: 10.09.2014
(73) Titulaire: Commissariat à l'Énergie Atomique et aux Énergies Alternatives, 75015 Paris (FR)
(72) Inventeur: MERCIER, Sylvain, 38120 Saint Egreve (FR); CHATROUX, Daniel, 38470 Teche (FR); DESBOIS-RENAUDIN, Matthieu, 38250 Villard de Lans (FR); GARNIER, Laurent, 69970 Marennes (FR)
(74) Mandataire: Guérin, Jean-Philippe
(86) Numéro de dépôt international: PCT/EP2012/071082
(87) Numéro de publication internationale: WO 2013/064407

(56) Documents cités:
- EP-A2- 1 295 757
- EP-A2- 2 362 480
- WO-A1-01/37393

## Description

L'invention concerne un dispositif d'équilibrage de charge pour batterie de puissance à accumulateurs électrochimiques.

Les systèmes électriques de forte puissance à tension continue connaissent un développement important. En effet, de nombreux systèmes de transport incluent une alimentation de tension continue.

Les véhicules hybrides combustion/électrique ou électriques incluent notamment des batteries de forte puissance. De telles batteries sont utilisées pour entraîner un moteur électrique à courant alternatif par l'intermédiaire d'un onduleur. Les niveaux de tension nécessaires pour de tels moteurs atteignent plusieurs centaines de Volts, typiquement de l'ordre de 400 Volts. De telles batteries comportent également une forte capacité afin de favoriser l'autonomie du véhicule en mode électrique.

Pour obtenir de fortes puissances et capacités, on place plusieurs groupes d'accumulateurs en série. Le nombre d'étages (nombre de groupes d'accumulateurs) et le nombre d'accumulateurs en parallèle dans chaque étage varient en fonction de la tension, du courant et de la capacité souhaités pour la batterie. L'association de plusieurs accumulateurs est appelée une batterie d'accumulateurs. Les accumulateurs électrochimiques utilisés pour de tels véhicules sont généralement du type lithium ion pour leur capacité à stocker une énergie importante avec un poids et un volume contenus. Les technologies de batterie de type Lithium ion phosphate de fer LiFePO4 font l'objet d'importants développements du fait d'un niveau de sécurité intrinsèque élevé, au détriment d'une densité de stockage d'énergie un peu en retrait. Un accumulateur électrochimique a habituellement une tension nominale de l'ordre de grandeur suivant :
3.3 V pour une technologie lithium-ion phosphate de Fer, LiFePO4,
4.2 V pour une technologie de type lithium-ion à base d'oxyde de cobalt. L'invention peut également s'appliquer à des super-condensateurs.

La charge ou décharge d'un accumulateur se traduit respectivement par une croissance ou décroissance de la tension à ses bornes. On considère un accumulateur chargé ou déchargé lorsque celui-ci a atteint un niveau de tension défini par son processus électrochimique. Dans un circuit utilisant plusieurs étages d'accumulateur(s), le courant circulant à travers les étages est le même. Le niveau de charge ou de décharge des étages dépend donc des caractéristiques intrinsèques des accumulateurs. Des différences de tension entre les étages apparaissent en cours de charge ou de décharge du fait des disparités de fabrication, de vieillissement, d'assemblage et de température de fonctionnement entre les différents accumulateurs.

Pour un accumulateur de technologie Li-ion, une tension trop élevée ou trop faible, dite tension de seuil, peut endommager ou détruire ce dernier. Pour exemple, la surcharge d'un accumulateur Li-ion à base d'oxyde de cobalt, peut entraîner son emballement thermique et un départ de feu. Pour un accumulateur Li-ion à base de phosphate de fer, une surcharge se traduit par une décomposition de l'électrolyte qui diminue sa durée de vie ou le détériore. Une décharge trop profonde qui amène à une tension inférieure à 2 V, par exemple, entraîne principalement une oxydation du collecteur de courant de l'électrode négative lorsque celui-ci est en cuivre et donc une détérioration de l'accumulateur. En conséquence, la surveillance des tensions aux bornes de chaque étage d'accumulateur(s) est obligatoire lors de la charge et de la décharge pour une question de sécurité et de fiabilité. Un dispositif de surveillance est ainsi généralement disposé en parallèle de chaque étage et permet d'assurer cette fonction.

Le dispositif de surveillance a pour fonction de suivre l'état de charge (ou la charge résiduelle) et décharge de chaque étage d'accumulateur(s) et de transmettre l'information au circuit de contrôle afin d'arrêter la charge ou la décharge de la batterie lorsqu'un étage a atteint sa tension de seuil. Cependant, sur une batterie avec plusieurs étages d'accumulateur(s) disposés en série, si la charge est arrêtée lorsque l'étage le plus chargé atteint sa tension de seuil, les autres étages peuvent ne pas être totalement chargés. Inversement, si la décharge est arrêtée lorsque l'étage le plus déchargé atteint sa tension de seuil, les autres étages peuvent ne pas être totalement déchargés. La capacité de chaque étage d'accumulateur(s) n'est dès lors pas exploitée, ce qui représente un problème majeur dans des applications de types transport avec batteries embarquées ayant de fortes contraintes d'autonomie. Pour palier ce problème, le dispositif de surveillance est généralement associé à un dispositif d'équilibrage de charge.

Le dispositif d'équilibrage a pour fonction d'optimiser la charge de la batterie et donc son autonomie en amenant les étages d'accumulateur(s) mis en série à un état de charge et/ou décharge identique. Il existe deux catégories de dispositifs d'équilibrage, les dispositifs d'équilibrage dits à dissipation d'énergie, ou dits à transfert d'énergie.

Avec les systèmes d'équilibrage à dissipation d'énergie, la tension aux bornes des étages est uniformisée en détournant le courant de charge d'un ou des étages ayant atteint la tension de seuil et en dissipant l'énergie dans une résistance. En variante, la tension aux bornes des étages est uniformisée en déchargeant un ou des étages ayant atteint la tension de seuil haute.

Cependant, de tels systèmes d'équilibrage à dissipation d'énergie présentent l'inconvénient majeur de consommer plus d'énergie que nécessaire pour charger la batterie. En effet, il faut décharger plusieurs accumulateurs ou dériver le courant de charge de plusieurs accumulateurs pour que le ou les derniers accumulateurs un peu moins chargés terminent leur charge. L'énergie dissipée peut donc être très supérieure à l'énergie de la ou des charges restant à réaliser. De plus, ils dissipent l'énergie excédentaire en chaleur, ce qui n'est pas compatible avec les contraintes d'intégration dans les applications de types transport et embarquées, et ce qui induit une forte baisse de la durée de vie des accumulateurs lorsque la température s'élève.

Les systèmes d'équilibrage à transfert d'énergie échange quand à eux de l'énergie entre la batterie auxiliaire ou un réseau auxiliaire d'énergie et les étages d'accumulateurs.

Le transfert d'énergie peut s'effectuer soit de manière unidirectionnelle, de la batterie aux étages ou des étages à la batterie, ou soit de manière bidirectionnelle, de la batterie aux étages et des étages à la batterie ou d'étage à étage adjacents.

Pour limiter les pertes lors des transferts d'énergie, la demande FR11/51724, non publiée à la date de dépôt de la présente demande, décrit un dispositif d'équilibrage amélioré. Ce document propose l'utilisation d'une structure basée sur le principe d'un convertisseur flyback pour assurer à la fois l'équilibrage des étages d'accumulateur(s), à travers la décharge du ou des étage(s) dont le ou les(s) état(s) de charge et/ou le ou le(s) capacité(s) sont les plus élevées, et le transfert d'énergie de la batterie d'accumulateurs, dite de puissance, au réseau auxiliaire du véhicule. Un convertisseur abaisseur nécessaire pour alimenter le réseau auxiliaire basse tension à partir d'une batterie haute tension peut ainsi être évité. De plus, le réseau auxiliaire peut être alimenté uniquement par les dispositifs d'équilibrage sans l'utilisation d'une batterie auxiliaire.

Pour simplifier la régulation des dispositifs d'équilibrage connectés en parallèle, les dispositifs sont commandés de façon individuelle. Ainsi, l'étage d'accumulateur(s) qui présente la capacité et/ou l'état de charge le plus élevé, fournit l'énergie au réseau auxiliaire. Le fonctionnement individuel des dispositifs d'équilibrage oblige le dispositif d'équilibrage actif à fournir la totalité de l'énergie requise sur le réseau auxiliaire. Le dimensionnement des dispositifs d'équilibrage doit donc être réalisé en conséquence.

Pour réduire et répartir la puissance fournie par chaque dispositif d'équilibrage, certains documents comme le brevet US4717833 proposent d'utiliser en simultané les différents dispositifs d'équilibrage. Ce document propose une commande utilisant une méthode de régulation assurant la répartition des courants entre les dispositifs d'équilibrage afin d'éviter que certains convertisseurs soient plus sollicités que d'autres de par les disparités entre ces derniers. Ce document présente une méthode de contrôle interdépendante de convertisseurs connectés en parallèle. La méthode de contrôle met en oeuvre une mesure de courant et une mesure de tension par et sur chaque convertisseur, et fait appel à un bus d'interconnexion entre les convertisseurs. Le bus d'interconnexion permet d'échanger l'information de répartition des courants entre les convertisseurs.

De ce fait, les boucles de régulation sont dépendantes les unes des autres et doivent se synchroniser. Cette liaison physique entre convertisseurs doit être insensible aux bruits parasites et ne doit en aucun cas entraîner l'arrêt du fonctionnement des convertisseurs lorsqu'elle est à l'état ouvert ou en court-circuit. Cette liaison physique doit en outre être dimensionnée à la présence de différents niveaux de tension entre les étages ou éléments, avec des amplitudes élevées. Une telle commande est ainsi complexe et coûteuse à la fois pour sa mise au point et pour sa fabrication.

La demande EP2362480 divulgue un dispositif d'équilibrage selon le préambule de la revendication 1, dans lequel la charge est échangée entre les éléments de stockage.

L'invention vise à résoudre un ou plusieurs de ces inconvénients. L'invention porte ainsi sur un dispositif d'équilibrage de charge d'un dispositif de stockage électrique de puissance incluant plusieurs éléments de stockage électrique connectés en série, comprenant:
- au moins deux convertisseurs continu/continu à limitation de courant, présentant chacun :
   - une entrée de réception d'une consigne de tension de sortie du convertisseur ;
   - une entrée destinée à être connectée aux bornes d'un élément de stockage respectif ;
   - une sortie destinée à être connectée à un réseau électrique ayant une tension régulée à un niveau inférieur à la tension aux bornes du dispositif de stockage ;
- un module de commande :
   - déterminant les charges résiduelles respectives des éléments connectés aux entrées;
   - appliquant une consigne de tension plus élevée au convertisseur connecté à l'élément ayant la charge résiduelle la plus élevée.

Selon une variante, chaque convertisseur inclut un capteur du courant à sa sortie et un capteur de la tension à sa sortie.

Selon encore une variante, chaque convertisseur comporte une boucle de régulation de la tension appliquée sur sa sortie, la boucle de régulation abaissant cette consigne de tension proportionnellement au courant fourni par le convertisseur à sa sortie.

Selon une autre variante, le module de commande est configuré pour appliquer des consignes de tension identiques à au moins deux convertisseurs.

Selon encore une autre variante, le module de commande génère une consigne de tension pour chaque convertisseur proportionnelle à sa charge résiduelle déterminée.

Selon une variante, le module de commande génère des consignes de tension distinctes et échelonnées selon des incréments de tension identiques.

Selon encore une variante, la hiérarchie d'attribution des consignes de tension par le module de commande correspond à la hiérarchie des charges résiduelles déterminées.

Selon une autre variante, le convertisseur inclut un transformateur dont un enroulement primaire est connecté en pont entre quatre interrupteurs commandés en modulation de largeur d'impulsion par le module de commande.

Selon une autre variante, le transformateur est un transformateur à point milieu dont un enroulement secondaire est connecté entre deux interrupteurs commandés par le module de commande, l'enroulement secondaire comportant un point milieu connecté à une sortie du convertisseur.

L'invention porte en outre sur un système d'alimentation électrique, comprenant :
- un dispositif d'équilibrage de charge tel que défini ci-dessus ;
- un dispositif de stockage électrique de puissance incluant plusieurs éléments de stockage électrique, ces éléments étant connectés à des convertisseurs respectifs du dispositif d'équilibrage de charge ;
- un réseau électrique connecté à la sortie du dispositif d'équilibrage de charge et ayant une tension régulée à un niveau inférieur à la tension aux bornes du dispositif de stockage.

Selon une variante, les consignes de tension sont incluses dans la plage de tension de régulation dudit réseau.

Selon une autre variante, le module de commande est configuré pour :
- récupérer une mesure du courant fourni par le dispositif d'équilibrage au réseau ;
- extrapoler la charge résiduelle de chacun des éléments de stockage en fonction de la mesure de courant récupérée.

Selon encore une variante, le dispositif de stockage est une batterie de puissance à accumulateurs électrochimiques.

Selon encore une autre variante, la tension nominale de la batterie de puissance est au moins six fois supérieure à la tension nominale de régulation du réseau.

L'invention porte en outre sur un véhicule automobile incluant un système tel que défini ci-dessus, dans lequel le réseau est un réseau auxiliaire d'alimentation de périphériques, dont la tension de régulation est comprise entre 10,5 V et 14 V.

D'autres caractéristiques et avantages de l'invention ressortiront clairement de la description qui en est faite ci-après, à titre indicatif et nullement limitatif, en référence aux dessins annexés, dans lesquels :
- la figure 1 est une représentation schématique d'un exemple de système d'alimentation électrique mettant en oeuvre l'invention ;
- la figure 2 illustre un exemple de mesures exploitées par des convertisseurs d'un dispositif d'équilibrage ;
- la figure 3 est un diagramme illustrant le fonctionnement d'une première variante de dispositif d'équilibrage en l'absence de batterie connectée aux bornes d'un réseau auxiliaire ;
- la figure 4 illustre de façon schématique un convertisseur avec sa régulation pouvant être intégré dans une troisième variante de dispositif d'équilibrage ;
- la figure 5 est un diagramme illustrant le fonctionnement de la troisième variante du dispositif d'équilibrage en l'absence de batterie connectée aux bornes du réseau auxiliaire, sans recouvrement des tensions de consigne des différents convertisseurs lors de variations d'intensité ;
- la figure 6 est un diagramme illustrant le fonctionnement de la troisième variante, avec recouvrement des tensions de consigne des différents convertisseurs ;
- la figure 7 est une représentation électrique équivalente d'une batterie connectée au réseau auxiliaire ;
- la figure 8 est un diagramme illustrant le fonctionnement de la troisième variante du dispositif d'équilibrage en présence d'une batterie aux bornes du réseau auxiliaire, durant une recharge de cette batterie ;
- la figure 9 est un diagramme illustrant le fonctionnement de la troisième variante du dispositif d'équilibrage en présence d'une batterie aux bornes du réseau auxiliaire durant une décharge de cette batterie ;
- la figure 10 illustre un exemple particulièrement avantageux de circuit de conversion pouvant être intégré dans les convertisseurs.

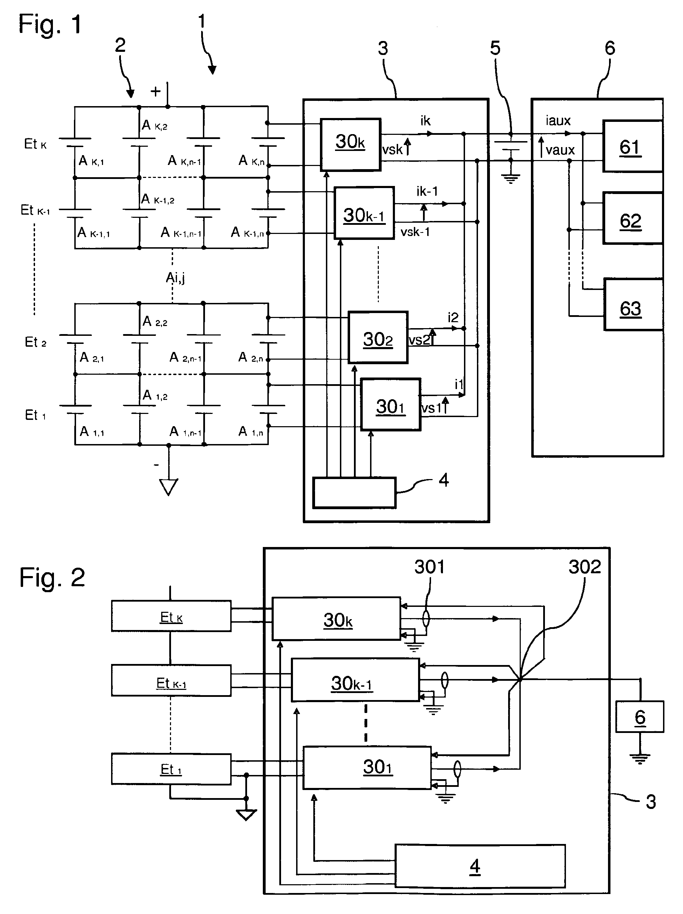

La figure 1 est une représentation schématique d'un système d'alimentation électrique 1 incluant une batterie 2 de puissance. La batterie 2 comprend k étages Et₁ à Etₖ, formant k éléments de stockage électrique connectés électriquement en série (avec k au moins égal à 2, de préférence au moins égal à 3). Chaque étage i inclut avantageusement n accumulateurs A_{i,1} à A_{i,n} connectés électriquement en parallèle (avec n au moins égal à 2). Le système d'alimentation électrique 1 inclut également un dispositif d'équilibrage de charge 3 de la batterie 2. La tension entre la borne positive et la borne négative de la batterie 2 présente une valeur typiquement comprise entre 100V et 750V, par exemple de l'ordre de 400V. La batterie 2 est par exemple destinée à alimenter le moteur d'un véhicule hybride ou électrique en étant connectée aux bornes d'un onduleur, et est avantageusement isolée du châssis métallique d'un tel véhicule.

Le dispositif d'équilibrage 3 comprend une interface de connexion configurée pour être connectée aux bornes de chacun des étages ou éléments Etᵢ. Le dispositif d'équilibrage 3 comprend aussi une interface de connexion configurée pour être connectée à un réseau auxiliaire 6, par exemple un réseau électrique de bord d'un véhicule, dont la tension est généralement régulée à une valeur proche de 12V. Cette tension régulée peut par exemple varier dans une plage comprise entre 10,5 V et 14 V. Cette tension régulée est typiquement au moins six fois inférieure à la tension aux bornes de la batterie 2.

Le dispositif d'équilibrage 3 comporte des convertisseurs 30₁ à 30ₖ, par exemple un convertisseur par étage de la batterie 2. On peut également prévoir un convertisseur pour plusieurs étages en série de la batterie 2. Les convertisseurs 30₁ à 30ₖ sont avantageusement isolés. Les convertisseurs 30₁ à 30ₖ peuvent être monodirectionnels ou bidirectionnels. Comme décrit ultérieurement, les convertisseurs 30₁ à 30ₖ sont destinés à la fois à assurer l'équilibrage des étages Etᵢ de la batterie 2 et l'alimentation du réseau auxiliaire 6, en appliquant respectivement des tensions de sortie vs1 à vsk et des intensités de sortie i1 à ik. La sortie de chacun des convertisseurs 30₁ à 30ₖ est connectée au réseau auxiliaire 6 pour appliquer une même différence de potentiel vaux aux bornes du réseau auxiliaire 6.

Le dispositif d'équilibrage 3 inclut également un module de commande 4 connecté aux convertisseurs 30ᵢ. Une batterie auxiliaire 5 (ou un condensateur, ou un super-condensateur) est avantageusement connectée aux bornes du réseau 6.

La figure 2 illustre de façon plus détaillée des informations exploitées par les convertisseurs 30₁ à 30ₖ pour mettre en oeuvre l'invention. Chaque convertisseur 30ᵢ récupère (par mesure interne ou par une mesure fournie par exemple par le module de commande 4) la valeur de tension vaux sur sa sortie (identique à sa tension de sortie vsi) et la valeur d'intensité ii qu'il fournit sur sa sortie au réseau auxiliaire 6. Des charges auxiliaires (61, 62, 63) telles qu'un climatiseur, un autoradio sont connectées au réseau 6. Chaque convertisseur récupère également une valeur de consigne de tension vᵢ fournie par le module de commande 4.

Les convertisseurs 30₁ à 30ₖ sont conçus comme des sources de tension limitées en courant. Un convertisseur 30ᵢ présente une limitation de courant notée liₘₐₓ.

Le module de commande 4 détermine (par mesure et/ou par calcul comme décrit ultérieurement) la charge résiduelle des différents étages Etᵢ de la batterie 2. Le module de commande 4 peut notamment déterminer la charge résiduelle d'un étage sur la base d'une détermination de l'état de charge et de la capacité de cet étage. Le module de commande 4 génère des consignes de tension supérieures aux autres pour les convertisseurs dont les étages sont déterminés comme les plus chargés.

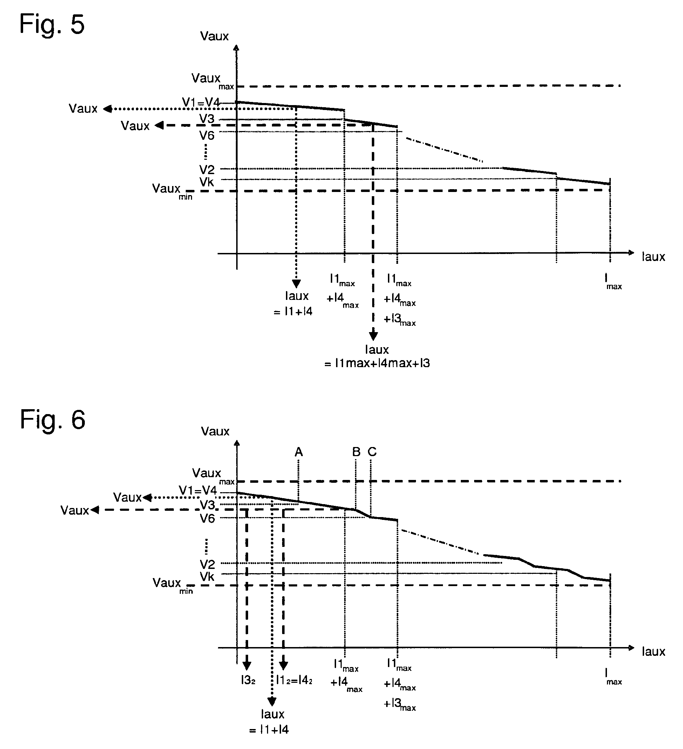

La méthode de régulation suggérée par l'invention tire profit de la tolérance du niveau de tension du réseau 6, et éventuellement de la batterie auxiliaire 5, dont les tensions nominales peuvent varier d'environ 10,5 V à 14 V (correspondant respectivement aux valeurs Vauxₘₐₓ et Vauxₘᵢₙ illustrées figure 5).

Selon un mode de mise en oeuvre de l'invention, les valeurs de consigne de tension vᵢ appliquées aux convertisseurs 30₁ à 30ₖ sont définies sur cette plage en fonction d'un ordre de priorité défini par le module de commande 4. En effet, les étages d'accumulateurs Et₁ à Etₖ sont classés par le module de commande 4 selon un ordre fonction par exemple de leur charge résiduelle. Une consigne de tension vᵢ est assignée à chaque convertisseur 30ᵢ. Plus un étage Etᵢ a une charge résiduelle élevée, plus la consigne de tension vᵢ assignée par le module de commande 4 au convertisseur 30ᵢ de cet étage est élevée.

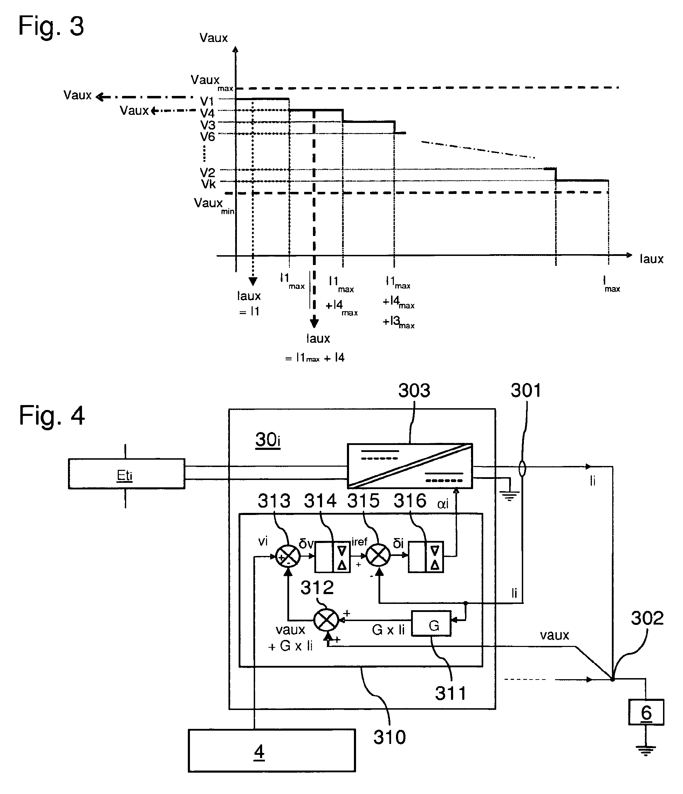

Selon une première variante dont le diagramme de commande est illustré à la figure 3, les valeurs Vᵢ des consignes de tension des convertisseurs 30ᵢ sont fixées à des niveaux prédéfinis. Les niveaux prédéfinis peuvent être échelonnés selon des incréments de tension identiques.

Dans l'exemple illustré, le module de commande 4 détermine le classement suivant des charges résiduelles pour les étages Etᵢ :
Et₁ > Et₄ > Et₃ > Et₆ > ..... > Et₂ > Etₖ

Par conséquent, le module de commande 4 attribue les niveaux prédéfinis aux consignes de tension Vᵢ selon la hiérarchie suivante :
V₁ > V₄ > V₃ > V₆ > ..... > V₂ > Vₖ

Avec Vauxₘₐₓ > Vᵢ > Vauxₘᵢₙ

Dans les diagrammes des figures 3, 5, 6, la batterie 5 n'est pas connectée au réseau 6.

Comme cela ressort du diagramme de la figure 3, les convertisseurs 30ᵢ dont la consigne de tension vᵢ est la plus élevée fournissent automatiquement et prioritairement une contribution au courant iₐᵤₓ sur le réseau 6.

Dans un premier cas de figure (flèches en pointillés), le courant lₐᵤₓ appelé par le réseau 6 est inférieur à la limitation l1ₘₐₓ. Le convertisseur 30₁ fournit ainsi l'intégralité du courant lₐᵤₓ et impose sa tension de sortie Vs1 (correspondant sensiblement à sa consigne de tension V1) comme tension Vaux sur le réseau 6. Les consignes de tension des autres convertisseurs étant inférieures à la tension Vaux, ces autres convertisseurs ne contribuent pas au courant lₐᵤₓ.

Dans un second cas de figure (flèches en traits discontinus), le courant lₐᵤₓ appelé par le réseau 6 est supérieur à la limite l1ₘₐₓ mais inférieur à la limite l1ₘₐₓ + l4ₘₐₓ. Comme lₐᵤₓ est supérieur à la limite l1ₘₐₓ, la tension de sortie Vs1 baisse en dessous de la consigne de tension V1, jusqu'à atteindre le niveau de la tension de sortie Vs4 (correspondant sensiblement à la consigne de tension V4). Le convertisseur 30₁ fournit son courant l1 = l1ₘₐₓ. Du fait d'une consigne de tension V4 inférieure à V1, le convertisseur 30₄ fournit un courant I4 en complément, de sorte que lₐᵤₓ = l1ₘₐₓ + l4. Les consignes de tension des autres convertisseurs étant inférieures à la tension Vaux, ces autres convertisseurs ne contribuent pas au courant lₐᵤₓ.

Ainsi, chaque fois que iₐᵤₓ dépasse un seuil d'intensité (correspondant à un cumul de limitations d'intensité des convertisseurs dont les étages sont les plus chargés et/ou les capacités les plus élevées), la tension vaux baisse et un nouveau convertisseur apporte automatiquement sa contribution au courant iₐᵤₓ. L'invention permet de répartir le courant sur les différents étages en déchargeant prioritairement les étages les plus chargés, ce qui contribue à équilibrer les charges entre les étages. De plus, un tel équilibrage est réalisé en alimentant le réseau 6, l'utilisation de tels courants d'équilibrage étant ainsi optimisée pour limiter les pertes inutiles par dissipation. En outre, un tel dispositif d'équilibrage 3 se dispense de boucles de régulation complexes interdépendantes au niveau des convertisseurs, et évite par ailleurs de faire appel à de complexes interfaces de communication adaptées aux niveaux de tension des différents étages.

Le module de commande 4 modifie les consignes de tension vᵢ en fonction de l'évolution des charges résiduelles déterminées. Des exemples de suivi de charge résiduelle sont détaillés par la suite.

Dans les exemples illustrés, les convertisseurs 30ᵢ comportent tous une même limite d'intensité liₘₐₓ. Des convertisseurs 30ᵢ comportant différentes limites d'intensité liₘₐₓ peuvent bien entendu être utilisés dans le cadre de l'invention.

Avantageusement, chaque convertisseur 30ᵢ comporte un capteur de courant 301 afin de pouvoir mettre en oeuvre la fonction de limitation de courant. En intégrant un capteur de courant 301 dans chaque convertisseur 30ᵢ, il n'est pas nécessaire de prévoir une communication de cette information du module de commande 4 vers les différents convertisseurs 30ᵢ.

Avantageusement, chaque convertisseur 30ᵢ comporte un capteur de tension 302 afin de pouvoir mettre en oeuvre une boucle de régulation de tension. En intégrant un capteur de tension 302 dans chaque convertisseur 30ᵢ, il n'est pas nécessaire de prévoir une communication de cette information du module de commande 4 vers les différents convertisseurs 30ᵢ. De telles boucles de régulation dans les convertisseurs 30ᵢ ne sont pas interdépendantes.

Selon une deuxième variante non illustrée, les valeurs vi des consignes de tension des convertisseurs 30ᵢ sont fixées de façon proportionnelle à la charge résiduelle de leurs étages. Pour des accumulateurs dont la tension à leurs bornes varie fortement en fonction de leur charge résiduelle, les valeurs vi des consignes de tension des convertisseurs 30ᵢ peuvent être avantageusement fixées de façon proportionnelle à la tension mesurée en entrée des convertisseurs.

Dans les première et deuxième variantes, les consignes de tension vᵢ présentent toutes des niveaux distincts pour éviter une éventuelle indécision sur les contributions au courant du réseau 6 entre deux convertisseurs qui auraient deux consignes de tension identiques.

La figure 4 illustre un exemple de convertisseur 30ᵢ avec sa régulation, pouvant être intégré dans un dispositif d'équilibrage 3 selon une troisième variante. Dans cette variante, un circuit de résistance interne positive est intégré dans chaque convertisseur pour induire une chute de tension proportionnelle au courant de sortie du convertisseur sur la tension de sortie mesurée. Ainsi, des convertisseurs commandés avec une même consigne de tension se répartissent de façon homogène leur contribution au courant iₐᵤₓ.

Le convertisseur 30ᵢ inclut un circuit de conversion continu/continu 303 comportant avantageusement une isolation galvanique. Le convertisseur 30ᵢ comprend en outre un circuit de régulation 310. Le circuit de régulation 310 génère un rapport cyclique αi dont la valeur est comprise entre 0 et 1 en fonction des valeurs ii et vaux mesurées respectivement par les capteurs 301 et 302. Le circuit de régulation 310 applique sa consigne de rapport cyclique αi sur le circuit de conversion 303.

Le circuit de régulation 310 comporte une boucle lente régulant la tension vaux, et incluant un multiplicateur 311 et un sommateur 312. Le multiplicateur 311 applique un coefficient multiplicatif G au courant ii. Le sommateur 312 cumule la valeur de tension vaux à la sortie du multiplicateur 311. La sortie du sommateur 312 permet d'ajuster une diminution de tension de sortie vsi en fonction du courant fourni ii. La sortie du sommateur 312 est appliquée sur une entrée inverseuse d'un soustracteur 313. La valeur de consigne vi est appliquée sur l'entrée non inverseuse du soustracteur 313. Le soustracteur 313 génère ainsi un signal d'erreur de tension de sortie δv.

Le circuit de régulation 310 comporte une boucle rapide régulant l'intensité ii, et incluant un correcteur 314, un soustracteur 315 et un correcteur 316. Le correcteur 314 élabore une consigne de courant Iref à partir du signal d'erreur de tension de sortie δv. Le correcteur 314 comporte un limiteur qui limite les variations de la valeur Iref dans une plage prédéfinie. Le correcteur 314 peut être de tout type connu, par exemple de type Proportionnel Intégral. Le soustracteur 315 soustrait le courant mesuré ii de la consigne de courant Iref, afin de générer un signal d'erreur de courant δi. Le correcteur 316 élabore le rapport cyclique αi en fonction du signal d'erreur de courant δi. Le correcteur 316 comporte un limiteur qui limite les variations de la valeur αi dans une plage prédéfinie. Le correcteur 316 peut être de tout type connu, par exemple de type Proportionnel Intégral.

Le diagramme de la figure 5 illustre une première mise en oeuvre de la troisième variante. Dans cette mise en oeuvre, la chute de tension induite par le circuit de résistance positive dans la boucle de régulation est inférieure à l'écart entre deux niveaux successifs de consignes de tension. La consigne de tension V1 est ici identique à la consigne de tension V4.

Dans un premier cas de figure (illustré par les flèches en pointillés), un courant laux inférieur à l1ₘₐₓ + l4ₘₐₓ est appelé par le réseau 6. Les convertisseurs 30₁ et 30₄ fournissent chacun des courants l1 et l4 identiques. La tension du réseau auxiliaire Vaux est légèrement inférieure à V1 du fait de la chute de tension induite par le circuit de résistance positive.

Dans un second cas de figure (illustré par les flèches en trait discontinu), un courant laux supérieur à I1ₘₐₓ + I4ₘₐₓ mais inférieur à l1ₘₐₓ + l4ₘₐₓ + l3ₘₐₓ est appelé par le réseau 6. Les convertisseurs 30₁ et 30₄ fournissent chacun des courants l1ₘₐₓ et I4ₘₐₓ identiques. Le convertisseur 30₃ fournit un courant l₃ complémentaire, de sorte que laux vaut ici l1ₘₐₓ + l4ₘₐₓ + l3.

Une fois l'intensité l1ₘₐₓ + I4ₘₐₓ atteinte, les autres convertisseurs 30ᵢ sont sollicités les uns après les autres avec des sauts de tensions à chaque seuil d'intensité. Le niveau de tension Vaux est déterminé par la courbe caractéristique Vaux=f(laux) illustrée.

Le diagramme de la figure 6 illustre une seconde mise en oeuvre de la troisième variante. Dans cette mise en oeuvre, la chute de tension induite par le circuit de résistance positive dans la boucle de régulation est supérieure à l'écart entre deux niveaux successifs de consignes de tension. La consigne de tension V1 est ici identique à la consigne de tension V4.

Sur une zone de recouvrement, des convertisseurs sont sollicités selon les consignes de tension, la tension Vaux et la valeur de la résistance interne. Pour exemple, pour un courant laux compris entre un courant nul et le courant correspondant au point A, les convertisseurs 30₁ et 30₄ fournissent chacun des courants l1 et l4 identiques.

Pour un courant lₐᵤₓ compris entre le point A et le point B, les convertisseurs 30₁ et 30₄ fournissent des courants répartis selon les consignes de tension, la tension Vaux et la résistance interne. Le point A est défini comme le point pour lequel la tension Vaux est égale à la tension V3. Le point B est défini comme le point pour lequel la tension Vaux est égale à V1-Ri * l1 max. Les convertisseurs 30₁ et 30₄ fournissent chacun un courant égal à (V1-Vaux)/Ri=(V4-Vaux)/Ri, avec Ri la résistance interne. Ces courants sont notés l1₂ et I4₂ sur la figure 6. Le convertisseur 30₃ fournit le complément du courant, à savoir l3₂ = laux - l1₂ - I4₂. Les valeurs d'intensité sont extrapolées par intersection entre la caractéristique V=f(I) de chaque convertisseur contributeur pris isolément (non illustrée pour des raisons de lisibilité) et le niveau de tension Vaux pour le point de fonctionnement donné.

Pour un courant laux compris entre le point B et le point C, les convertisseurs 30₁ et 30₄ fournissent chacun des courants l1ₘₐₓ et l4ₘₐₓ identiques. Le point C est défini comme le point pour lequel la tension Vaux est égale à la tension V6. Le convertisseur 30₃ fournit un courant l₃ complémentaire, de sorte que laux vaut ici l1ₘₐₓ + I4ₘₐₓ + l3.

Le module de commande 4 comprend avantageusement un capteur du courant iaux traversant le réseau 6. Le module de commande 4 peut ainsi extrapoler le courant de sortie de chaque convertisseur 30ᵢ à partir de la consigne de tension qu'il lui applique et du courant iaux mesuré. Le courant iaux peut également être extrapolé par une simple mesure de la tension vaux effectuée par le module de commande 4 sur le réseau 6. Le module de commande 4 peut en effet extrapoler le courant iaux à partir de la caractéristique Vaux=f(laux).

En connaissant suffisamment bien le rendement de chaque convertisseur 30ᵢ en fonction de son courant de sortie, on peut calculer, à partir du courant de sortie extrapolé, le courant fourni par son étage Etᵢ et ainsi la charge résiduelle de cet étage Etᵢ.

Une telle détermination de la décharge d'un étage Etᵢ par calcul s'avère particulièrement avantageuse lorsque les étages de la batterie 2 incluent des accumulateurs électrochimiques dont le profil de tension en fonction de la charge est très plat. Par exemple, le profil de tension en fonction de sa charge d'un accumulateur de type lithium ion LiFePO4 est particulièrement plat et une mesure de tension à ses bornes ne permet pas de déterminer sa charge de façon précise.

Lorsqu'une batterie auxiliaire 5 ou un dispositif de stockage électrique auxiliaire est connectée aux bornes du réseau 6, le fonctionnement du dispositif de régulation 3 peut être adapté en conséquence. Le module de commande 4 pourra ainsi adapter les consignes de tension vi à différents niveaux par rapport à la tension de la batterie auxiliaire 5, afin de procéder soit à la recharge, soit à la décharge de cette batterie auxiliaire. Dans cette configuration, les consignes de tension vi sont également incluses dans la plage de tension de fonctionnement de la batterie auxiliaire 5. La hiérarchie des niveaux des consignes de tension vi est également attribuée aux convertisseurs 30ᵢ en fonction de la hiérarchie des charges résiduelles de leurs étages Etᵢ.

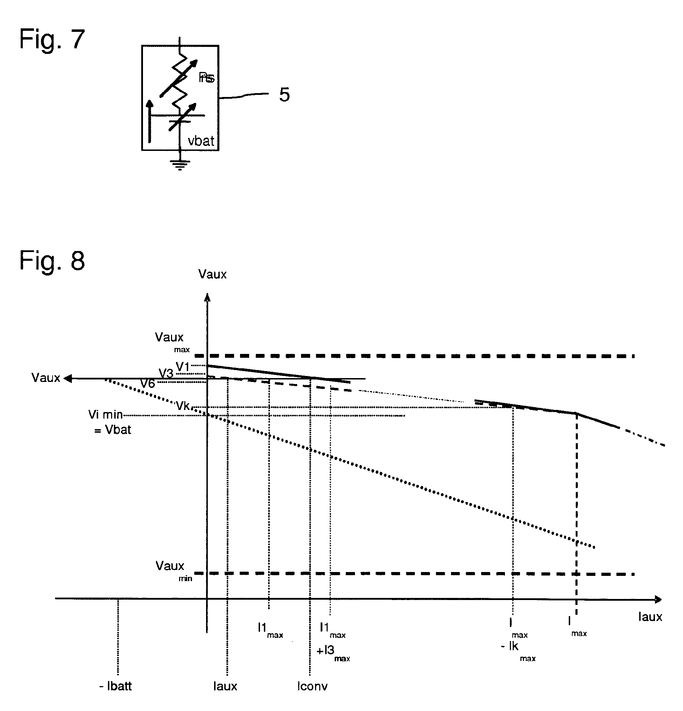

La batterie 5 est modélisée par le schéma électrique de la figure 7. On considère que la batterie 5 comporte une tension à vide vbat et une résistance série rs. On considère que cette résistance rs présente une même valeur en charge et en décharge. Pour simplifier l'analyse du fonctionnement du dispositif d'équilibrage 3 en combinaison avec la batterie 5, on se basera sur des convertisseurs 30ᵢ présentant une caractéristique linéaire de la tension caractéristique V=f(I).

Pour combiner le fonctionnement du dispositif d'équilibrage 3 avec une batterie 5, on utilise avantageusement des convertisseurs 30ᵢ à résistance interne positive. La pente de la caractéristique Vsi=f(li) des convertisseurs 30ᵢ peut être ajustée dynamiquement à la caractéristique de la batterie 5 et/ou à la vitesse de charge/décharge souhaitée pour cette batterie 5.

Les niveaux des consignes de tension vi seront relevés de sorte qu'au moins une des consignes de tension soit supérieure à la tension vbat de la batterie 5, afin de procéder à sa charge. Pour charger la batterie 5 au moyen de l'ensemble des convertisseurs 30ᵢ, chacune des consignes de tension est supérieure à la tension vbat.

Les niveaux des consignes de tension vi seront rabaissés de sorte que l'ensemble des consignes de tension soit inférieur à la tension vbat de la batterie 5, afin de procéder à sa décharge dans les étages Etᵢ.

La figure 8 illustre un mode de fonctionnement d'un tel dispositif d'équilibrage 3 lors de la recharge de la batterie 5 par seulement une partie des convertisseurs 30ᵢ. La courbe en trait plein correspond à la caractéristique des convertisseurs 30ᵢ en l'absence de la batterie 5. La courbe en trait discontinu correspond à la caractéristique des convertisseurs 30ᵢ en présence de la batterie 5. La courbe en pointillés correspond à la caractéristique de la batterie 5 en l'absence des convertisseurs 30ᵢ.

Pour un courant auxiliaire laux, le courant fourni par les convertisseurs 30ᵢ est égal au courant Iconv et le courant absorbé par la batterie est égal à -Ibat (convention générateur). La batterie 5 est donc en charge. Le courant de charge ibat à travers la batterie 5 diminue lorsque le courant auxiliaire iaux augmente. La batterie auxiliaire 5 fournit du courant lorsque les convertisseurs 30ᵢ ont tous atteint leur limitation de courant.

La répartition des courants entre les convertisseurs dépend de leur consigne de tension Vi. Pour le cas illustré figure 8, le convertisseur 30₁ associé à l'étage Et₁ fournit son courant maximum l1ₘₐₓ. Le convertisseur 30₃ associé à l'étage Et₃ fournit le complément du courant, à savoir l3=lconv -l1ₘₐₓ. En effet, la tension Vaux sur le réseau 6 est inférieure à la consigne de tension V3 du convertisseur 30₃.

S'il est souhaité que la batterie auxiliaire 5 fournisse une partie du courant iaux absorbé par le réseau 6 sans être rechargée, quel que soit le courant iaux fourni au réseau 6 (par exemple lorsque l'état de charge de la batterie 5 est maximal), la consigne de tension du convertisseur de l'étage ayant la charge résiduelle la plus élevée devra être inférieure ou égale à la tension de la batterie auxiliaire 5 à vide.

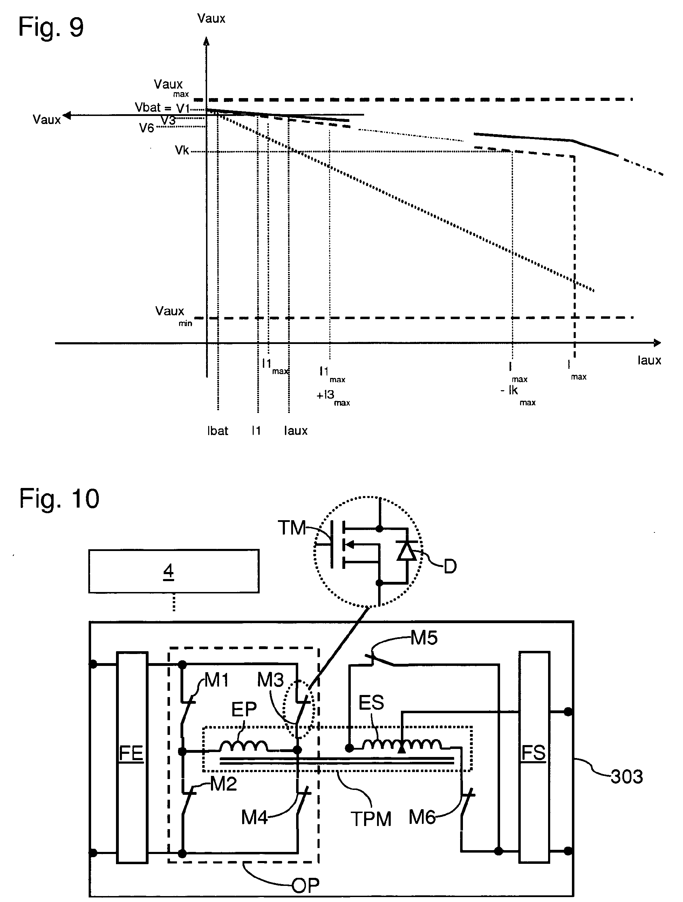

Un tel fonctionnement est illustré sur la figure 9. La courbe en trait plein correspond à la caractéristique des convertisseurs 30ᵢ en présence de la batterie 5. La courbe en trait discontinu correspond à la caractéristique des convertisseurs 30ᵢ en l'absence de la batterie 5. La courbe en pointillés correspond à la caractéristique de la batterie 5 en l'absence des convertisseurs 30ᵢ.

La consigne de tension V1 du convertisseur 30₁ associé à l'étage Et₁ (présentant la charge résiduelle la plus élevée), a été choisie égale à la tension Vbat. Ainsi, le courant auxiliaire iaux est fourni conjointement par la batterie auxiliaire 5 et les convertisseurs lorsque le courant auxiliaire est non nul. Si la consigne de tension V1 est choisie supérieure à la tension Vbat, le courant iaux sera fourni uniquement par la batterie auxiliaire 5 jusqu'à ce que la tension vaux du réseau 6 atteigne la consigne de tension V1.

Pour un courant laux, le courant fourni par les convertisseurs 30ᵢ est égal au courant Iconv et le courant fourni par la batterie 5 est égal à Ibat (convention générateur). La batterie 5 contribue donc à fournir une partie du courant lₐᵤₓ sur le réseau 6. Le courant ibat augmente lorsque le courant iaux augmente. La répartition des courants entre les convertisseurs 30ᵢ dépend de leur consigne de tension Vi. Pour le cas illustré à la figure 9, le convertisseur 30₁ associé à l'étage Et₁ fournit un courant l1 inférieur à sa limite l1ₘₐₓ. En effet, la tension Vaux est supérieure à la consigne de tension V3 du convertisseur 30₃.

Le module de commande 4 peut extrapoler les charges résiduelles des étages Etᵢ au moyen des mesures et des calculs détaillés précédemment. Le module de commande 4 doit juste disposer de la charge résiduelle de la batterie 5 pour réaliser une extrapolation des charges résiduelles des étages Etᵢ. La charge extraite de la batterie 5 est extrapolable également en mesurant le courant laux. L'utilisation d'un capteur de tension permet d'estimer le courant laux et le courant Ibat, en considérant que la charge résiduelle et la température de la batterie 5 sont connus.

La figure 10 illustre un exemple de circuit de conversion 303 particulièrement avantageux pour un dispositif d'équilibrage selon l'invention. Le circuit de conversion 303 comporte un filtre d'entrée FE connecté à l'interface de connexion d'entrée. La sortie du filtre FE est connectée à un onduleur à pont complet OP. L'onduleur à pont complet inclut des interrupteurs commandés M1, M2, M3 et M4. Le circuit de conversion 303 comporte également un transformateur à point milieu au secondaire TPM. Le transformateur TPM comporte un enroulement primaire EP connecté en pont entre les interrupteurs M1 à M4. Les interrupteurs M1 à M4 sont commandés en modulation de largeur d'impulsion par le module de commande 4, afin de définir le niveau de tension de sortie. Le circuit de conversion 303 comprend en outre un redresseur synchrone incluant des interrupteurs commandés M5 et M6. L'enroulement secondaire ES est connecté entre les interrupteurs M5 et M6.

Le transformateur à point milieu TPM permet de minimiser le nombre d'interrupteurs au secondaire pour assurer le redressement du signal. Les interrupteurs commandés M1 à M6 sont commandés par le module de commande 4. Les interrupteurs commandés M1 à M6 peuvent présenter la structure illustrée : un transistor TM de type nMOS avec une diode de roule libre D connectée en parallèle. De tels interrupteurs M5 et M6 sont à privilégier en lieu et place d'un redressement par l'intermédiaire de diodes afin de maximiser le rendement du circuit de conversion 303.

Un filtre de sortie FS a ses entrées connectées entre le point milieu de l'enroulement secondaire et un noeud commun aux interrupteurs M5 et M6. Les sorties du filtre FS forment l'interface de sortie du circuit de conversion 303.

Bien que non illustré, le système d'alimentation électrique 1 comprend avantageusement un dispositif de mesure et de surveillance de la tension aux bornes des étages d'accumulateurs Etᵢ.

## Revendications

1. Dispositif d'équilibrage (3) de charge d'un dispositif de stockage électrique de puissance (2) incluant plusieurs éléments de stockage électrique (Et₁,... Etₖ) connectés en série, **caractérisé en ce qu'**il comprend:
- au moins deux convertisseurs continu/continu (30ᵢ) à limitation de courant, présentant chacun :
- une entrée de réception d'une consigne de tension de sortie du convertisseur ;
- une entrée destinée à être connectée aux bornes d'un élément (Etᵢ) de stockage respectif ;
- une sortie destinée à être connectée à un réseau électrique (6);
- un module de commande (4) :
- déterminant les charges résiduelles respectives des éléments (Etᵢ) connectés aux entrées;
- appliquant une consigne de tension plus élevée au convertisseur connecté à l'élément ayant la charge résiduelle la plus élevée.
characterisé **en ce que** la sortie a une tension régulée à un niveau inférieur à la tension aux bornes du dispositif de stockage (2).

2. Dispositif d'équilibrage (3) de charge selon la revendication 1, dans lequel chaque convertisseur (30ᵢ) inclut un capteur (301) du courant à sa sortie et un capteur (302) de la tension à sa sortie.

3. Dispositif d'équilibrage (3) de charge selon la revendication 1 ou 2, dans lequel chaque convertisseur (30ᵢ) comporte une boucle de régulation (310) de la tension appliquée sur sa sortie, la boucle de régulation abaissant cette consigne de tension proportionnellement au courant fourni par le convertisseur à sa sortie.

4. Dispositif d'équilibrage (3) de charge selon l'une quelconque des revendications 1 à 3, dans lequel le module de commande (4) est configuré pour appliquer des consignes de tension identiques à au moins deux convertisseurs (30₁, 30₄).

5. Dispositif d'équilibrage (3) de charge selon l'une quelconque des revendications 1 à 3, dans lequel le module de commande (4) génère une consigne de tension pour chaque convertisseur proportionnelle à sa charge résiduelle déterminée.

6. Dispositif d'équilibrage (3) de charge selon l'une quelconque des revendications 1 à 3, dans lequel le module de commande (4) génère des consignes de tension distinctes et échelonnées selon des incréments de tension identiques.

7. Dispositif d'équilibrage (3) de charge selon la revendication 6, dans lequel la hiérarchie d'attribution des consignes de tension par le module de commande (4) correspond à la hiérarchie des charges résiduelles déterminées.

8. Dispositif d'équilibrage (3) de charge selon l'une quelconque des revendications précédentes, dans lequel le convertisseur inclut un transformateur (TPM) dont un enroulement primaire (EP) est connecté en pont entre quatre interrupteurs commandés en modulation de largeur d'impulsion par le module de commande (4).

9. Dispositif d'équilibrage de charge selon la revendication 8, dans lequel le transformateur (TPM) est un transformateur à point milieu dont un enroulement secondaire (ES) est connecté entre deux interrupteurs commandés par le module de commande (4), l'enroulement secondaire (ES) comportant un point milieu connecté à une sortie du convertisseur.

10. Système (1) d'alimentation électrique, comprenant :
- un dispositif d'équilibrage de charge (3) selon l'une quelconque des revendications précédentes ;
- un dispositif de stockage (2) électrique de puissance incluant plusieurs éléments de stockage électrique, ces éléments étant connectés à des convertisseurs respectifs du dispositif d'équilibrage de charge (3) ;
- un réseau électrique (6) connecté à la sortie du dispositif d'équilibrage de charge et ayant une tension régulée à un niveau inférieur à la tension aux bornes du dispositif de stockage (2).

11. Système selon la revendication 10, dans lequel les consignes de tension (Vi) sont incluses dans la plage de tension de régulation dudit réseau (6).

12. Système selon l'une quelconque des revendications 10 ou 11, dans lequel le module de commande (4) est configuré pour :
- récupérer une mesure du courant fourni par le dispositif d'équilibrage (3) au réseau (6) ;
- extrapoler la charge résiduelle de chacun des éléments de stockage (Etᵢ) en fonction de la mesure de courant récupérée.

13. Système selon l'une quelconque des revendications 10 à 12, dans lequel le dispositif de stockage (2) est une batterie de puissance à accumulateurs électrochimiques.

14. Système selon l'une quelconque des revendications 10 à 13, dans lequel la tension nominale de la batterie de puissance est au moins six fois supérieure à la tension nominale de régulation du réseau (6).

15. Véhicule automobile incluant un système selon l'une quelconque des revendications 10 à 14, dans lequel le réseau (6) est un réseau auxiliaire d'alimentation de périphériques, dont la tension de régulation est comprise entre 10,5 V et 14 V.

## Patentansprüche

1. Vorrichtung zum Ausgleich (3) der Ladung einer elektrischen Energiespeichervorrichtung (2), die mehrere elektrische Speicherelemente (Et₁, ... Etₖ) aufweist, die in Reihe geschaltet sind, **dadurch gekennzeichnet, dass** sie Folgendes aufweist:
- mindestens zwei Gleichspannungswandler (30ᵢ) mit Strombegrenzung, die jeweils Folgendes aufweisen:
- einen Eingang zum Empfangen einer Sollausgangsspannung des Wandlers;
- einen Eingang, der dazu bestimmt ist, an die Klemmen eines jeweiligen Speicherelements (Etᵢ) angeschlossen zu werden;
- einen Ausgang, der dazu bestimmt ist, an ein Stromnetz (6) angeschlossen zu werden,
- ein Steuermodul (4):
- das die jeweiligen Restladungen der Elemente (Etᵢ) bestimmt, die an den Eingängen angeschlossen sind;
- das eine höhere Sollspannung an den Wandler anlegt, der an das Element angeschlossen ist, das die höchste Restladung aufweist, **dadurch gekennzeichnet, dass** der Ausgang eine Spannung aufweist, die auf einem niedrigeren Niveau reguliert ist, als die Spannung an den Klemmen der Speichervorrichtung (2).

2. Vorrichtung zum Ausgleich (3) der Ladung nach Anspruch 1, wobei jeder Wandler (30i) einen Sensor (301) des Stroms an seinem Ausgang und einen Sensor (302) der Spannung an seinem Ausgang aufweist.

3. Vorrichtung zum Ausgleich (3) der Ladung nach Anspruch 1 oder 2, wobei jeder Wandler (30i) eine Regelschleife (310) der Spannung aufweist, die an seinem Ausgang angelegt ist, wobei die Regelschleife diese Sollspannung proportional zu dem Strom senkt, der durch den Wandler an seinem Ausgang geliefert wird.

4. Vorrichtung zum Ausgleich (3) der Ladung nach einem der Ansprüche 1 bis 3, wobei das Steuermodul (4) konfiguriert ist, um Sollspannungen anzulegen, die identisch mit mindestens zwei Wandlern (301, 304) sind.

5. Vorrichtung zum Ausgleich (3) der Ladung nach einem der Ansprüche 1 bis 3, wobei das Steuermodul (4) eine Sollspannung für jeden Wandler erzeugt, die proportional zu seiner bestimmten Restladung ist.

6. Vorrichtung zum Ausgleich (3) der Ladung nach einem der Ansprüche 1 bis 3, wobei das Steuermodul (4) Sollspannungen erzeugt, die unterschiedlich sind und nach identischen Spannungsinkrementen gestaffelt sind.

7. Vorrichtung zum Ausgleich (3) der Ladung nach Anspruch 6, wobei die Hierarchie des Zuordnens der Sollspannungen durch das Steuermodul (4) der Hierarchie der bestimmten Restladungen entspricht.

8. Vorrichtung zum Ausgleich (3) der Ladung nach einem der vorhergehenden Ansprüche, wobei der Wandler einen Transformator (TPM) aufweist, wovon eine Primärwicklung (EP) in Brückenverbindung zwischen vier Schaltern angeschlossen ist, die durch Pulsbreitenmodulation von dem Steuermodul (4) gesteuert werden.

9. Vorrichtung zum Ausgleich der Ladung nach Anspruch 8, wobei der Transformator (TPM) ein Mittelpunkttransformator ist, wovon eine Sekundärwicklung (ES) zwischen zwei Schaltern angeschlossen ist, die von dem Steuermodul (4) gesteuert werden, wobei die Sekundärwicklung (ES) einen Mittelpunkt aufweist, der an einem Ausgang des Wandlers angeschlossen ist.

10. Stromversorgungssystem (1), umfassend:
- eine Vorrichtung zum Ausgleich der Ladung (3) nach einem der vorhergehenden Ansprüche;
- eine elektrische Energiespeichervorrichtung (2), die mehrere elektrische Speicherelemente aufweist, wobei diese Elemente an die jeweiligen Wandler der Vorrichtung zum Ausgleich der Ladung (3) angeschlossen sind;
- ein Stromnetz (6), das an dem Ausgang der Vorrichtung zum Ausgleich der Ladung angeschlossen ist und eine Spannung aufweist, die auf einem niedrigeren Niveau reguliert ist, als die Spannung an den Klemmen der Speichervorrichtung (2).

11. System nach Anspruch 10, wobei die Sollspannungen (Vi) in dem Regelungsspannungsbereich des Netzes (6) liegen.

12. System nach einem der Ansprüche 10 oder 11, wobei das Steuermodul (4) konfiguriert ist, um:
- eine Messung des Stroms abzurufen, der von der Vorrichtung zum Ausgleich der Ladung (3) an das Netz (6) geliefert wird;
- die Restladung von jedem der Speicherelemente (Eti) in Abhängigkeit von der abgerufenen Messung des Stroms zu extrapolieren.

13. System nach einem der Ansprüche 10 bis 12, wobei die Speichervorrichtung (2) eine Strombatterie mit elektrochemischen Energiespeichern ist.

14. System nach einem der Ansprüche 10 bis 13, wobei die Nennspannung der Strombatterie mindestens sechsmal höher als die Nenn-Regelspannung des Netzes (6) ist.

15. Kraftfahrzeug, umfassend ein System nach einem der Ansprüche 10 bis 14, wobei das Netz (6) ein Hilfsnetz zur Versorgung von Peripheriegeräten ist, dessen Regelspannung zwischen 10,5 V und 14 V liegt.

## Claims

1. Device (3) for balancing the charge of an electrical power storage device (2) including a plurality of electrical storage elements (Et₁,... Etₖ) connected in series, **characterized in that** it comprises:
- at least two current-limiting DC/DC converters (30ᵢ), each having:
∘ an input for receiving an output voltage setpoint of the converter;
∘ an input intended to be connected to the terminals of a respective storage element (Etᵢ);
∘ an output intended to be connected to an electrical network (6);
- a control module (4):
∘ determining the respective residual charges of the elements (Etᵢ) connected to the inputs;
∘ applying a higher voltage setpoint to the converter connected to the element having the highest residual charge;
**characterized in that** the output has a voltage regulated to a lower level than the voltage across the terminals of the storage device (2).

2. Device (3) for balancing charge according to Claim 1, in which each converter (30ᵢ) includes a sensor (301) of the current at its output and a sensor (302) of the voltage at its output.

3. Device (3) for balancing charge according to Claim 1 or 2, in which each converter (30ᵢ) comprises a control loop (310) for regulating the voltage applied to its output, the control loop lowering said voltage setpoint in proportion to the current supplied by the converter to its output.

4. Device (3) for balancing charge according to any one of Claims 1 to 3, in which the control module (4) is configured to apply identical voltage setpoints to at least two converters (30₁, 30₄).

5. Device (3) for balancing charge according to any one of Claims 1 to 3, in which the control module (4) generates a voltage setpoint for each converter in proportion to its determined residual charge.

6. Device (3) for balancing charge according to any one of Claims 1 to 3, in which the control module (4) generates separate voltage setpoints that are staggered in identical voltage increments.

7. Device (3) for balancing charge according to Claim 6, in which the hierarchy for the assignment of the voltage setpoints by the control module (4) corresponds to the hierarchy of the determined residual charges.

8. Device (3) for balancing charge according to any one of the preceding claims, in which the converter includes a transformer (TPM) a primary winding (EP) of which is connected in a bridge between four switches controlled through pulse-width modulation by the control module (4).

9. Device for balancing charge according to Claim 8, in which the transformer (TPM) is a centre-tapped transformer a secondary winding (ES) of which is connected between two switches controlled by the control module (4), the secondary winding (ES) comprising a centre tap connected to an output of the converter.

10. Electrical power supply system (1), comprising:
- a device (3) for balancing charge according to any one of the preceding claims;
- an electrical power storage device (2) including a plurality of electrical storage elements, these elements being connected to respective converters of the device (3) for balancing charge;
- an electrical network (6) connected to the output of the device for balancing charge and having a voltage regulated to a lower level than the voltage across the terminals of the storage device (2).

11. System according to Claim 10, in which the voltage setpoints (Vi) are included in the control voltage range of said network (6).

12. System according to either of Claims 10 and 11, in which the control module (4) is configured for:
- recovering a measurement of the current supplied by the balancing device (3) to the network (6);
- extrapolating the residual charge of each of the storage elements (Etᵢ) depending on the recovered current measurement.

13. System according to any one of Claims 10 to 12, in which the storage device (2) is an electrochemical accumulator power battery.

14. System according to any one of Claims 10 to 13, in which the nominal voltage of the power battery is at least six times greater than the nominal control voltage of the network (6).

15. Automotive vehicle including a system according to any one of Claims 10 to 14, in which the network (6) is an auxiliary power supply network for peripherals, the control voltage of which lies between 10.5 V and 14 V.
